# EUROPEAN PATENT SPECIFICATION

(11) **EP 1 869 358 B1**
(45) Date of publication and mention of the grant of the patent: **30.11.2011**
(21) Application number: 06733436.7
(22) Date of filing: 05.04.2006
(51) Int. Cl.: F16L 55/1645, B05B 13/06, B05C 7/08

(54) **ROTATABLE NOZZLE ARRANGEMENT (ECCENTRIC)**
DREHBARE DÜSENANORDNUNG (EXZENTRISCH)
DISPOSITION DE BUSE ROTATIVE (EXCENTRIQUE)

(30) Priority: 07.04.2005 SE 0500771
(43) Date of publication of application: 26.12.2007
(73) Proprietor: PROLINE AB, 802 91 Gävle (SE)
(72) Inventor: EDSTRÖM, Sten, S-804 29 Gävle (SE)
(74) Representative: Lindblom, Erik J
(86) International application number: PCT/SE2006/050057
(87) International publication number: WO 2006/107269

(56) References cited:
- CH-A5- 608 194
- DE-A1- 2 559 144
- DE-A1- 10 043 673
- SE-C2- 524 741
- US-A- 3 196 826
- US-A- 5 951 761

## Description

### TECHNICAL FIELD OF THE INVENTION

The present invention relates generally to a rotatable nozzle arrangement that includes a nozzle, a bearing unit or a motor unit whose rotatable axel is co-ordinated with the nozzle.

The nozzle is intended to be placed in a tubular section and as it rotates distributes or sling curable, viscous plastic material onto the interior surface of the tubular section so as to create and build-up a viscous coating of plastic material of a given thickness.

The rotatable nozzle is co-ordinated with a bearing unit that includes a bearing, or a motor unit, said units being adapted for common axial movement through the tubular section.

In the case of small pipe dimensions, or a thin pipe there- is used only one bearing unit, to which there is fastened a Bowden-cable. In the case of larger or coarser pipe dimensions it is proposed that only one motor unit is used, such as a motor unit driven by compressed air.

This displacement will preferably be effected with the aid of a device that centres the nozzle in the tubular section via the bearing unit and/or the motor unit, said centring device having the form of an elastic or resilient plate or disc, and wherein the nozzle may be structured and designed to function as a small magazine for a percentage of the viscous plastic material that is fed by a pump, in a somewhat pulsating fashion, towards and up to the nozzle and its magazine, wherein mutually consecutive percentages of plastic material caused to rotate by the nozzle about the axis of rotation of the nozzle are slung and distributed from the nozzle in response to centrifugal forces acting on the curable viscous plastic material.

### Definitions and explanations

It can be mentioned in this connection that by **"viscous plastic material"** is meant primarily a curable plastic material that has a consistency corresponding to that of a "porridge consistency".

More particularly it is a question of a plastic material that is laden or mixed with reinforcement material, preferably in the form of glass flakes.

By **"pipe"** and **"tubular section"** is meant any form of tubular section on whose interior surface a viscous plastic material is able to adhere in the form of a coating and thereafter cure or harden to provide a durable lining. By pipes and tubular sections is meant liquid transporting conduits, such as tap water pipes and gas transporting conduits whose interior surfaces comprise a liquid tight or gas tight hardened plastic lining.

A particular intention in this respect is to provide a building installed corroded waste pipe made of plastic or metal, particularly iron, or such pipes that are otherwise defective with a protective and reinforced lining.

By **"coating"** is meant a layer or layers of viscous plastic material which has/have been slung by a rotating nozzle onto and fastened to an interior surface of a tubular section.

By **"lining"** is meant a cured or hardened coating on the interior surface of said tubular section.

It will be noted that a viscous plastic material in the form of sub-units is conveniently fed towards and up to a nozzle in which larger or smaller cavities are provided such as to form initially a limited magazine for plastic material sub-units in the absence of rotary movement, these sub-units being quickly caused to rotate in response to rotation of the nozzle by means of the friction acting, inter alia, on the inner wall part of the nozzle.

By "**plastic material sub-units**" is meant a sluggish, although running, plastic mass that can be considered to consist of a number of mutually sequential fictive sub-units, and by the term coating shall be understood a coating that is built-up and comprised of a number of such sub-units slung out and distributed by the nozzle.

When these plastic material sub-units meet the rotatable nozzle, a first plastic material sub-unit adjacent the inner surface of the nozzle is imparted a first rotational movement by means of frictional forces or vanes, this rotary movement being caused to accelerate.

When this first plastic material sub-unit has been imparted said first rotational movement, an adjacent or subsequent second plastic material sub-units will be imparted a second rotational movement as a result of the viscosity and internal friction of the plastic material, although this second rotational movement will be slightly slower than the speed at which said first plastic material sub-unit rotates.

The plastic material sub-units are, in this way, divided into mutually different "**layers**" which rotate at mutually different speeds, with said speeds increasing towards the periphery of the nozzle and/or an upper edge of the nozzle, and decreasing towards a rotational centre of the nozzle.

Although it will be understood that such "**layers**" will not be discernable in practical applications, such layers are truly formed and the present invention is based on the use of said layers.

It will also be understood that each plastic material sub-unit, plastic particle and/or reinforcing particle will be influenced by centrifugal forces during rotation.

The plastic material sub-units will thereby be forced outwards and the plastic material sub-units located in the magazine will be forced towards the inner surface of the nozzle and, in the presence of axially related slots in the nozzle, will be pressed through said slots and therewith form "**jets**" corresponding to the shape of the slots, wherewith the sub-units will leave the nozzle at right angles or essentially at right angles under the action of centrifugal forces, and wherewith said jets will rotate at a speed corresponding to the rotational speed or the peripheral speed of the outer peripheral wall-part of the nozzle.

The **"hollow cylindrical"** spread of mutually sequential collections or jets of plastic material sub-units thus formed is given a high rotational speed and a low material concentration or low material density, with the plastic material sub-units spread and slung-out in a helical configuration.

According to the invention plastic material sub-units are fed to the nozzle cavity in a large surplus relative to the outfeed that occurs via jets through the slots, wherewith this surplus will be pressed outwards and over an upper edge of a nozzle wall-part, primarily by the centrifugal forces generated.

The thus formed **"hollow cylindrical"** upper and initial spread of a collection of plastic material sub-units is given a lower rotational speed and a higher material concentration or material density than a subsequent coating.

By **"low (or lower) (plastic) material density"** is meant a plastic material that is slung out within a hollow cylindrical collection through slots in the wall portion of the rotating nozzle.

According to the invention, the rotatable nozzle arrangement uses a bearing unit and a nozzle that have the smallest possible diameter in practice, so as to enable them to be used in thin or narrow tubular sections that have a diameter corresponding to and exceeding 25 mm, although such a nozzle arrangement may also be used in respect of coarser tubular sections, such as tubular sections having a diameter of up to 75 and 100 mm, although the arrangement will conveniently include a centring device in the case of these coarser tubular sections.

### BACKGROUND OF THE INVENTION

Several different examples of methods, arrangements and constructions relating to the above technical field are known in the art.

A first example of the background technology and the technical field to which the invention relates is found in the arrangement that is illustrated and described in Patent Publication US-A-5 951 761**.**

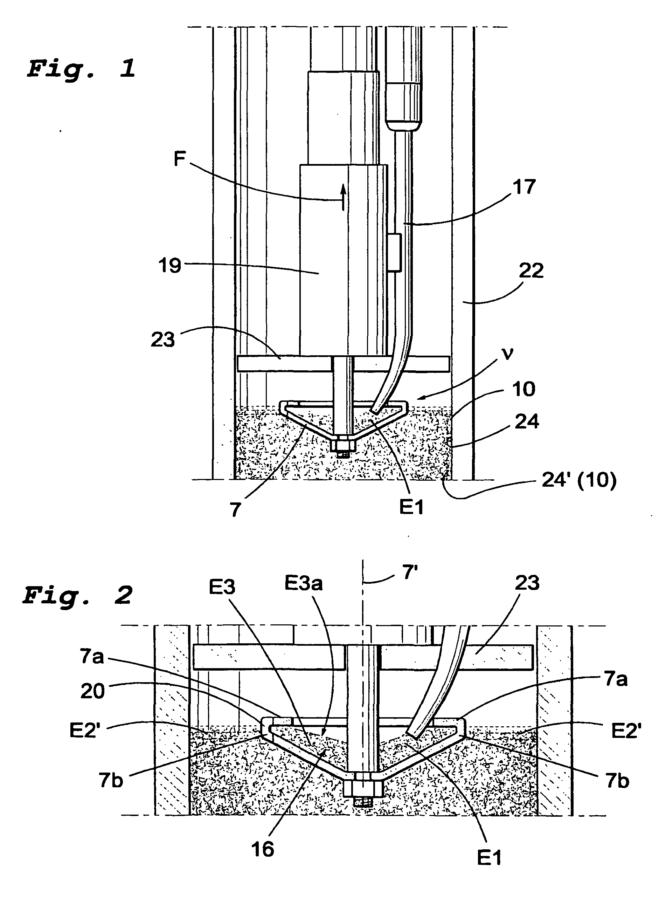

This arrangement and its described *modus operandi* will be illustrated more specifically hereinafter with reference to the accompanying Figures 1 and 2.

The nozzle described and illustrated in this prior art document includes narrow and small axial slots (20), shown more clearly in the figures and described more specifically in, inter alia, column 2, lines 53 to 67, where a collected viscous and curable plastic material in the nozzle shall exit through said slots to be slung or distributed onto the inner wall of the pipe in the form of "jets", where each of these jets is slung out to form a "logarithmic helix or spiral" and therewith form a hollow cylindrical collection.

The occurrence of jets within the hollow cylindrical collection causes said collection to obtain a small or low plastic material density.

The rotatable nozzle of this known arrangement has a larger diameter than that of the bearing unit, by a ratio of 1,4.

The illustrated nozzle has the form of a straight truncated cone with a cone angle corresponding to a value of 135°.

The contents of Patent Publication US-A-3 279 427 also belong to the earlier standpoint of techniques. This prior specification illustrates and describes an arrangement for coating a concrete pipe with an inner lining while using a plastic material admixed with sand.

In this case, the nozzle is positioned on one side of an air motor (8) and is driven via a gear arrangement (4, 6).

Patent Publication EP-A2-0 781 606 describes and illustrates an arrangement for lining the interior surface of a pipe (1).

The arrangement includes a rotatable nozzle (10) which is intended for displacement along the inside of the pipe (1), and means (12) for feeding a stream of viscous plastic material to the nozzle (10), wherewith the plastic material is slung or distributed against the interior wall of the pipe (1) from the periphery of the nozzle, solely via an upper edge of the nozzle (10) and under the influence of centrifugal forces, such as to form a viscous coating which is then allowed to harden.

The nozzle (10) has the form of a straight truncated cone having a cone angle of about 90°.

It is also suggested that material sub-units that are slung via the upper edge of the nozzle (10) in this way will move in a path that conforms to the shape of a "logarithmic spiral" and thus co-ordinated as or forming a hollow cylindrical collection where the plastic material sub-units have a high material density.

Patent Publication US-A-3 459 586 illustrates and describes a method and an arrangement for applying an internal coating to an interior surface with the aid of a number of teeth-like projections.

More particularly, the rotatable nozzle arrangement (12) is co-ordinated with a rotatable shaft (14), wherein the nozzle (35) is positioned on one side of the drive shaft (14) and held firmly by a collar (36).

Patent Publication DE-A1-198 05 027 illustrates and describes an arrangement for distributing viscous material along the interior surface of a hollow body with the aid of a rotating nozzle that includes openings (8).

The nozzle (4) includes openings or gaps orientated radially along the rotational axel through which grease is slung, wherewith the arrangement includes a grease delivery pipe which opens out towards the central part of the nozzle (4).

Patent Publication GB-A-2 218 773 illustrates and describes an arrangement with which the interior surface of a tubular section shall first be provided with an insulating coating (2), such as polyurethane foam, and thereafter be provided with a mechanically and chemically stable coating (3), such as epoxy resin coating.

US 3,196,826, forming the basis of claim 1, discloses an apparatus for spraying open-ended tubular shells. The apparatus comprises a rotary spray head composed of a plurality of dics arranged to project centrifugally an axially diverging annular spray radially outward therefrom.

DE 25 59 144 discloses an apparatus for applying paint to an inner surface of a tube. The apparatus comprises a centrifugal plate arranged for supplying paint at an angle relative to the axis of rotation.

The characteristic features of the present invention are closely related to the technical deliberations expressed in the International Patent Application **PCT/SE2004**/ **001692.**

The invention is also based on the technical deliberations that are illustrated and described more specifically in Swedish Patent Application 05 00678-8**.**

### SUMMARY OF THE PRESENT INVENTION

### TECHNICAL PROBLEMS

When taken into consideration the technical deliberations that a person skilled in this particular art must make in order to provide a solution to one or more technical problems that he/she encounters, it will be seen that on the one hand it is necessary initially to realize the measures and/or the sequence of measures that must be undertaken to this end and on the other hand to realize which means is/are required in solving one or more of said problems. On this basis it will be evident that the technical problems listed below are highly relevant to the development of the present invention.

When considering the earlier standpoint of techniques as described above it will be seen that a technical problem resides in the ability to realize the significance of, the advantages afforded by and/or the technical measures and deliberations that will be required in creating a rotatable nozzle arrangement of small outer dimensions and with a limited axial length, including a bearing unit or a motor unit and a nozzle co-ordinated therewith such as to create, with the aid of a wire drive (Bowden-cable) or a motor drive, conditions for slinging or distributing a viscous plastic material onto the inner surface of a tubular section in the form a viscous coating and where the nozzle shall be positioned eccentrically in relation to a bearing unit or a motor unit.

A further technical problem resides in the ability to realize the significance of, the advantages afforded by and/or the technical measures and deliberations that will be required in forming the rotatable nozzle so that it can enclose a plastic material volume corresponding to a chosen viscosity of said material, and therewith having an adapted depth with regard to the conical wall portion of the nozzle.

A technical problem also resides in the ability to realize the significance of, the advantages afforded by and/or the technical measures and deliberations that will be required in allowing a cone angle for the wall portion of a nozzle to be selected within the range of 30 to 60°, such as between 40 and 50°.

A technical problem also resides in the ability to realize the significance of, the advantages afforded by and/or the technical measures and deliberations that will be required in allowing said wall portion to be given the form of a straight truncated cone and to include a number of narrow through-penetrating slots that are adapted to create a hollow cylindrical collection of plastic material sub-units structured as jets that have a low material density.

Another technical problem resides in the ability to realize the significance of, the advantages afforded by and/or the technical measures and deliberations that will be required in allowing said slots to be structured in said wall portion so as to converge from the bearing unit or the motor unit towards the apex of the conical shape and therewith conform to the generatrices assigned to the conical shape.

A technical problem also resides in the ability to realize the significance of, the advantages afforded by and/or the technical measures and deliberations that will be required in allowing the periphery of a bearing unit or motor unit to be adapted so as to conform with the periphery of the upper, wider and open edge portion of the nozzle.

Another technical problem resides in the ability to realize the significance of, the advantages afforded by and/or the technical measures and deliberations that will be required in allowing the surface of the bearing unit or the motor unit that faces towards the nozzle to be located in a chosen plane.

Another technical problem resides in the ability to realize the significance of, the advantages afforded by and/or the technical measures and deliberations that will be required to allow the surface of the bearing unit or the motor unit that faces towards the nozzle to be bevelled to some extent or have a dome-shape.

Another technical problem resides in the ability to realize the significance of, the advantages afforded by and/or the technical measures and deliberations that will be required in order to allow a gap to be defined by a distance provided between a bearing-unit surface or motor-unit surface that faces towards the nozzle and the upper open edge portion of the nozzle such that the plastic material sub-units slung from the nozzle will form an upper hollow cylindrical collection of high material density, said gap preferably exceeding at least 2.0 mm.

Another technical problem resides in the ability to realize the significance of, the advantages afforded by and/or the technical measures and deliberations that will be required in allowing said gap to be smaller than 10 mm.

Another technical problem resides in the ability to realize the significance of, the advantages afforded by and/or the technical measures and deliberations that will be required in allowing said gap to provide a free passage without or at least generally without, material sub-units fastening to the bearing unit or to the motor unit so that the plastic material sub-units slung from the nozzle will form a hollow cylindrical collection of sub-units that have a high material density and therewith form a thick viscous coating on the interior surface of the tubular section.

A technical problem also resides in the ability to realize the significance of, the advantages afforded by and/or the technical measures and deliberations that will be required in allowing the outer diameter of a bearing unit, a motor unit and/or a nozzle to be between 15 and 30 mm, preferably about 20 mm, so as to enable the interior of thinner tubular sections to be coated with viscous material in the absence of a centring disc-shaped element, and to enable a viscous coating to be applied to the inner surface of a coarser tubular section with the aid of a centring disc element and then allowing the coating to harden and therewith form a lining.

Another technical problem resides in the ability to realize the significance of, the advantages afforded by and/or the technical measures and deliberations that will be required in allowing plastic material sub-units to be slung-out solely as a result of passing through a lower part of said gap close to the nozzle.

Another technical problem resides in the ability to realize the significance of, the advantages afforded by and/or the technical measures and deliberations that will be required in allowing a first selected percentage of the total amount of plastic material slung from the nozzle within an upper hollow cylindrical collection of high material density to be adapted for passage through said gap, and a second selected percentage of the total amount of material slung from the nozzle within a lower hollow cylindrical collection to have a low material density and to be adapted for passage through said through-penetrating slots.

Another technical problem resides in the ability to realize the significance of, the advantages afforded by and/or the technical measures and deliberations that will be required in allowing a lower hollow cylindrical collection of low material density to take-up splashes of plastic material from the overlying hollow cylindrical collection and, in addition, therewith create a varying energy influence on the coating layer that the upper hollow cylindrical collection has applied to the internal smooth or rough surface of the tubular section.

A technical problem also resides in the ability to realize the significance of, the advantages afforded by and/or the technical measures and deliberations that will be required in allowing the through-penetrating slots in the nozzle wall-portion that has the form of a straight truncated cone to extend from or in the vicinity of an open upper widened edge portion towards and conveniently up to a bottom portion and therewith increase the percentage of plastic material sub-units that are slung-out via said slots in the form of jets.

A technical problem also resides in the ability to realize the significance of, the advantages afforded by and/or the technical measures and deliberations that will be required in allowing the number of slots to be more than four in number and normally less than ten.

Another technical problem resides in the ability to realize the significance of, the advantages afforded by and/or the technical measures and deliberations that will be required in allowing the number of slots, the length and/or the width of said slots, the chosen rotational speed and a distance from the rotational centre of the nozzle to constitute parameters for regulating the percentage of plastic material slung through and from the nozzle and intended to form said hollow cylindrical collection of low material density.

Another technical problem resides in the ability to realize the significance of, the advantages afforded by and/or the technical measures and deliberations that will be required in allowing said bearing unit to be fastened to a Bowden cable whose casing is fastened to the bearing unit and the wire of which is fastened to a nozzle co-ordinated axle-means or trunnion.

A technical problem also resides in the ability to realize the significance of, the advantages afforded by and/or the technical measures and deliberations that will be required in allowing the nozzle to be provided with a cavity which functions as a magazine and which has a depth conforming to and smaller than the diameter of the open upper edge portion.

A technical problem also resides in the ability to realize the significance of, the advantages afforded by and/or the technical measures and deliberations that will be required in allowing the bearing unit, the nozzle and/or the Bowden-cable to vibrate, by providing an adapted clearance between the wire used and its casing.

A technical problem also resides in the ability to realize the significance of, the advantages afforded by and/or the technical measures and deliberations that will be required in allowing the eccentricity to be adapted to less than 50% of the diameter of the bearing unit.

Another technical problem resides in the ability to realize the significance of, the advantages afforded by and/or the technical measures and deliberations that will be required in allowing an eccentricity to be chosen where a peripheral edge section of the nozzle is adapted to align or connect with an imaginary cylinder that closely surrounds the bearing unit.

A technical problem also resides in the ability to realize the significance of, the advantages afforded by and/or the technical measures and deliberations that will be required in allowing a rotational change and/or a rotational transformation to be chosen between the wire of the Bowden-cable and the nozzle.

Another technical problem resides in the ability to realize the significance of, the advantages afforded by and/or the technical measures and deliberations that will be required in allowing a rotational transformation to take place via co-ordinated gears that have the same or different numbers of teeth.

Another technical problem resides in the ability to realize the significance of, the advantages afforded by and/or the technical measures and deliberations that will be required in allowing the bearing unit or the motor unit to be influenced for rotational movement about an axially orientated axel and therewith be able to adapt a distance between the peripheral edge part of the nozzle and the internal surface of the tubular section such as to achieve a coating that is more locally concentrated.

### SOLUTION

The present invention takes as its starting point the known technology concerning a rotatable nozzle arrangement of the kind described above, where this arrangement includes a nozzle and a bearing unit, or a motor unit, whose rotatable axel is co-ordinated with the nozzle.

The nozzle is adapted to sling or distribute a curable viscous plastic material collected, inter alia, in a nozzle-carried magazine onto the interior surface of the tubular section as it rotates in said tubular section and therewith create and build-up a curable viscous coating of chosen material thickness.

With the intention of solving one or more of the above technical problems, it is proposed in accordance with the present invention that the known technology shall be supplemented with the feature of orientating the nozzle eccentrically in relation to a bearing unit or a motor unit and by concentrating the infeed of plastic material to the nozzle and/or to the magazine onto and to an inner nozzle wall-portion in the form of a straight truncated cone.

The wall portion shall have a small cone angle within a well adapted range.

The wall portion will include a number of through-penetrating slots.

These slots shall be structured to converge towards and connect with generatrices for the virtual apex of the straight truncated conical shape.

It is also proposed in accordance with the invention that the diameter of the bearing unit or the motor unit shall concur with or exceed the upper, wider and open edge portion of the nozzle.

It is also proposed in particular that the surface of the bearing unit or the motor unit that faces towards the nozzle shall be a flat surface and extend at right angles to a rotating axel.

However, there is nothing to prevent the surface of the bearing unit or the motor unit that faces towards the nozzle having a dome-shape or being bevelled in the region of its periphery.

It is also proposed in accordance with the invention that there is provided a gap defined by spacing the surface of the bearing unit that faces towards the nozzle from the open edge part of the nozzle by a distance that at least exceeds 2.0 mm and, more particularly, is less than 10 mm.

It is also proposed in accordance with the invention that the diameter of the bearing unit or the motor unit will be between 15 and 30 mm, preferably about 20 mm.

Plastic material sub-units are adapted to enable them to be slung out through said gap in the form of hollow cylindrical collections of high material density.

An adapted and chosen first percentage of the total amount of plastic material sub-units of high material density will be caused to pass through said gap whereas a second percentage of the total material sub-units of low material density shall be caused to pass through said through-penetrating slots.

Through-penetrating slots shall be adapted to extend from an open upper edge-portion of the nozzle towards and up to a closed bottom portion.

In normal circumstances the slots will preferably be more than four in number, although normally less than 10.

A pipe that feeds plastic material sub-units towards and up to the nozzle extends through and alongside the bearing unit.

The bearing unit is co-ordinated with a Bowden-cable whose casing is fastened to the bearing unit and the wire of which is fastened to a nozzle co-ordinated trunnion or axle.

According to the invention, it is proposed that the nozzle includes a cavity which functions as a magazine and which has a depth that conforms to or is smaller than the diameter of the open upper edge-portion.

It shall be possible to cause the bearing unit and the nozzle to vibrate.

According to the invention it is proposed that a chosen eccentricity shall be smaller that 50% of the diameter of the bearing unit or the motor unit.

This eccentricity may conform to 10 to 20% of said diameter.

It is also proposed that a peripheral edge section of the nozzle is adapted to connect with a virtual cylinder that closely surrounds the bearing unit or the motor unit.

The invention will also include means for selecting a rotational change and/or a transformation of the speed of rotation between the driving axel of the Bowden-cable or the motor unit and the nozzle.

It is proposed that said means will include co-ordinated gears that have mutually the same or different diameters and/or mutually the same or different numbers of teeth.

It is particularly proposed that the bearing unit, or the motor unit, can be influenced for rotation about an axially orientated axel and therewith be able to controllably adapt a distance between the peripheral edge portion of the nozzle and the internal surface of the tubular section for a more locally concentrated coating of viscous plastic material sub-units.

### ADVANTAGES

Those advantages that can primarily be considered characteristic of the present invention and the special significant features afforded thereby consist in the creation of conditions for providing a rotatable nozzle arrangement that has a nozzle of small diameter and a bearing unit, or motor unit, of small diameter with the nozzle orientated eccentrically relative to the bearing unit or the motor unit.

These two components can be mounted close to one another in a beneficial manner, so as to create conditions which enable them to pass through narrow tubular sections as the internal surface of the tubular section is coated with a chosen viscous plastic material which is allowed to harden and therewith provide a rigid lining that may either be water tight or gas tight.

The invention is based on allowing the infeed of plastic material and plastic material sub-units to a small magazine in the nozzle to be concentrated to an inner nozzle-wall-portion in the shape of a straight truncated cone and thereby create conditions for spreading plastic material sub-units in separate and superimposed hollow cylindrical collections, where an upper collection shall pass through a gap formed above the nozzle and have a high material density, while a lower hollow cylindrical collection will have a low material density, and where this latter collection is applied via slots in the nozzle and has a higher rotational speed than the upper collection.

By selecting the speed at which the nozzle rotates it is possible to select a percentage distribution between those plastic material sub-units that pass between the gap and between the bearing unit (the motor unit) and the upper peripheral edge of the nozzle and those plastic material sub-units that pass through the underlying slots in the wall-portion of the nozzle, by, inter alia, choosing the number of slots present and the width and heights of these slots.

More particularly, it is proposed in accordance with the invention that the coating on the interior surface of the tubular section is built-up in two layers, a first layer of high material density and a second layer of low material density, where the latter layer is applied with the aid of concentrated jet-like material collections.

The primary characteristic features of the present invention are set forth in the characterising clause of the accompanying claim 1.

### BRIEF DESCRIPTION OF THE DRAWINGS

Known technology and an embodiment of the invention at present preferred and having characteristic features significant of the present invention will now be described in more detail by way of example and with reference to the accompanying drawings, in which;
**Figure 1** illustrates an arrangement according to Figure 2 of US Patent Application US-A-5 951 761**,** to which reference signs have been added;
**Figure 2** is an enlarged partial view of the rotatable nozzle included in the arrangement illustrated in Figure 1 although supplemented for the sake of clarity with those prerequisites associated with the technology known from this prior document;
**Figure 3** is a perspective illustration of a rotatable nozzle arrangement in which the nozzle is driven by a Bowden-cable connected with and fastened to a bearing unit, wherewith a pipe for the infeed of plastic material sub-units extends along the side of the Bowden-cable and therewith provides an infeed of plastic material sub-units to the proximity of or against a nozzle wall-portion in the form of a straight truncated cone;
**Figure 4** is a side view and a partially sectioned view of the arrangement shown in Figure 3.
**Figure 5** is a slightly enlarged view of the layered structure of the material collections that are slung or distributed by the nozzle onto the interior surface of a tubular section so as to build-up successively a coating of viscous plastic material, wherewith this coating may be allowed to harden so as to obtain a lining-forming wear resistant, water tight and gas tight layer;
**Figure 6** is a partially sectioned side view of an arrangement alternative to that shown in Figure 4;
**Figure 7** is intended to illustrate a first occurring thin hollow cylindrical collection of plastic material sub-units of high material density slung out in a given direction;
**Figure 8** is intended to illustrate a chosen displacement direction of a subsequently occurring thicker hollow cylindrical collection of plastic material sub-units slung out or distributed by the arrangement, where this collection has a low material density; and
**Figure 9** is a perspective view of a nozzle that has a small magazine of edge-related cross-section.

### DESCRIPTION OF KNOWN TECHNOLOGY

Figures 1 and 2 illustrate a known arrangement for slinging or distributing a curable and viscous plastic material onto the inner surface (24) of a tubular section (22) by means of a rotating nozzle (7), such as to create through a curing process a lining-forming wear resistant layer (24'; (10)) of plastic material, wherewith the rotatable nozzle (7) is co-ordinated with a bearing unit (19) adapted for common axial displacement (F) through the tubular section (22).

This displacement (F) is achieved with the aid of an elastic or resilient disc-formed device (23) that centres the nozzle (7) and/or the bearing unit (19) in the tubular section (22).

The nozzle (7) is structured to function as a magazine (16) for the viscous plastic material and its sub-units (E1), which are fed down via a pipe (17) to the nozzle (7) and its rotational centre (7') and which are caused to rotate by said nozzle (7) so that centrifugal forces acting on the curable viscous plastic material will cause the material to be slung from the nozzle (7) through narrow peripheral slots (20) and onto the inner surface (24) of the tubular section, wherewith the material sub-units are slung out at a rotational speed (v) corresponding to the rotational speed of the nozzle.

The material sub-units slung out by the arrangement will therewith have a speed and a direction related to a velocity component dependent on rotation of the nozzle and a centrifugal-force-dependent velocity related component, wherewith the outwardly slung plastic material sub-units are or become co-ordinated within a hollow cylindrical layer or collection (E2') of low material density and therewith moved helically or spirally towards the tubular section (22).

The functional contents of the prior patent publication make clear the need to accurately adapt the capacity of the infeed sub-units (E1) of the viscous plastic material in relation to the number of slots (20), the height and width dimensions of the slots and the number of slots chosen, so that the plastic sub-units (E1) fed to the nozzle (7) will be in direct relationship with the plastic sub-units that exit through said slots (20) in the form of jets, where a plastic material sub-unit (E2') is related to a slot (20) in Figure 2.

Since the illustrated embodiment includes five such slots (20), the control circuits used shall be adapted so that the outfeed of plastic material sub-units from a used plastic pump shall correspond to five times the number of plastic sub-units (E2') slung out per unit of time.

Thus, it is possible to establish a very low material concentration within the outwardly slung plastic sub-units (E2') forming a hollow cylindrical layer onto the interior surface (22a) of the tubular section and therewith provide a slow build-up of the viscous plastic coating (24) on the interior surface (22a) of the tubular section in very thin layers and with a relatively low speed (F) of movement of the rotatable nozzle (7) through the tubular section.

Reference is made to Column 2, lines 53 - 67; Column 5, lines 39 - 53; and to Column 5, lines 66 to Column 6, line 21 of said patent publication in this respect.

Plastic material sub-units co-ordinated in the magazine have been referenced (E3) and form an upper delimited surface (E3a), which is strongly stylized for the purpose of simplification.

### DESCRIPTION OF EMBODIMENTS AT PRESENT PREFERRED

It is pointed out initially that we have chosen to use in the following description of an embodiment at present preferred and including significant characteristic features of the invention and illustrated in the Figures of the accompanying drawings special terms and terminology with the primary intention of illustrating the inventive concept more clearly.

However, it will be noted that the expressions chosen here shall not be seen as limited solely to the terms used in the description but that each term chosen shall be interpreted as also including all technical equivalents that function in the same or at least essentially in the same way so as to achieve the same or essentially the same purpose and/or technical effect.

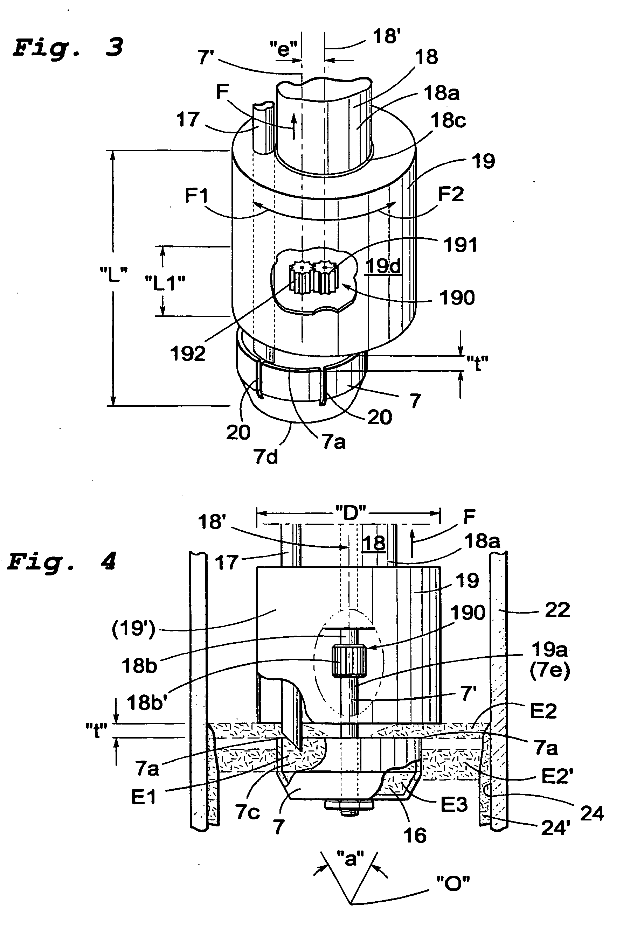

Figures 3 to 8 and Figure 9 thus illustrate schematically and in detail the fundamental prerequisites of the present invention, where significant properties of the invention have been concretised by the proposed embodiment described in more detail hereinafter.

Thus, Figure 3 illustrates in perspective a rotatable nozzle arrangement 1 that typically includes a rotatable nozzle 7 and a bearing unit 19.

In certain cases and in the case of coarse tubular dimensions the bearing unit 19 may be replaced with a motor unit, e.g. a compressed-air driven motor unit (19').

The bearing unit 19, or the motor unit (19') includes a rotatable axel 19a which is co-ordinated with the nozzle 7, wherewith the nozzle may be structured to sling out and distribute a curable viscous plastic material in the form of two separate collections E2, E2' during its rotation within a tubular section 22, said collections E2, E2' having, inter alia, been gathered in a magazine 16 provided in said nozzle 7 and being slung against the interior surface of said tubular section 22 so as to create and build-up a thickness of plastic material for said coating (10).

It is particularly proposed in accordance with the invention that the infeed of plastic material E1 to said magazine 16 shall be concentrated against the peripheral edge 7a of the nozzle 7 and to connect with an inner nozzle-wall-portion 7c in the form of a straight truncated cone or a corresponding shape, and wherein the nozzle shall be orientated eccentrically relative to the bearing unit or to the motor unit.

More particularly, it is proposed that the wall-portion 7c has a cone angle "a" within the range of 30 - 60°, such as 40 to 50°.

The wall-portion 7c includes a number of through-penetrating slots 20 which are primarily structured to converge towards the apex "O" of the truncated conical wall-portion.

The bearing unit 19 has a diameter "D" which is adapted to concur with and exceed the upper, wider and open edge-portion 7a of the nozzle 7.

A basic feature of the present invention is that material sub-units are "severed" from the delivered percentage of plastic material E1 with the aid of the slots 20 and slung out as a lower hollow cylindrical collection E2', wherewith the amount of sub-units within the collection E2' is caused to increase by increasing the speed of rotation, the number of slots provided, and also by increasing the height and width dimensions of the slots and the presence of one or more vanes in the direction of rotation and located in front of or behind respective slots.

This hollow-cylindrical collection E2' will, in each case, have a lower material density than the actual plastic material, with said material density diminishing with an increasing distance between the periphery of the nozzle and the internal surface of the tubular section.

By supplying a surplus of plastic material sub-units E1, i.e. in a stream of material greater than that required to form said hollow cylindrical collection E2', material sub-units E3 will be set into rotation within a nozzle-carried magazine 16 and these rotating material sub-units E3 will pass over the upper edge 7a of the nozzle in the form of a hollow cylindrical collection E2 of high material density, this density also decreasing with increasing distance between the periphery 7a of the nozzle 7 and the interior surface 24 of the tubular section 22, as described in more detail hereinafter.

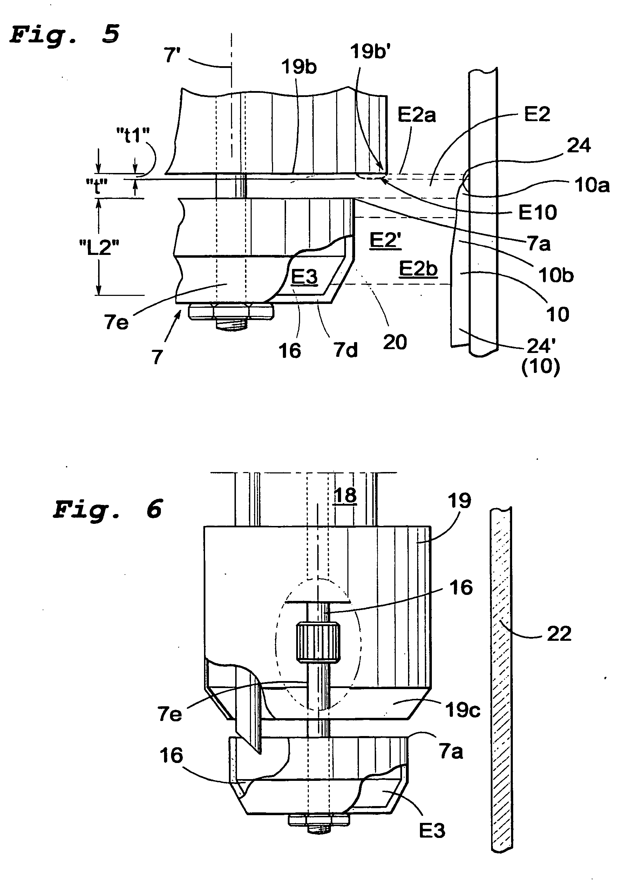

The nozzle surface 19b facing towards the bearing unit 19 is flat in the case of a first embodiment shown in Figure 4, whereas the surface 19c of the bearing unit facing towards the nozzle may be bevelled in a second embodiment of the invention according to Figure 6.

There is nothing to prevent the surface 19c having the shape of an inverted dome such as to open a gap "t" radially outwards.

When the outwardly slung plastic material sub-units E2 shall pass via a gap "t" the upper surface E2a of the plastic material sub-units E2 in event of a surplus will be able to strike and rotate along the periphery 19b' of the surface 19b (see Figure 5).

Heat generated in the bearing unit 19 can be assumed to contribute to a circular agglomeration of plastic material (shown with broken lines in Figure 5) referenced E10, therewith causing a constriction in the gap "t".

This agglomeration E10 can be eliminated when filling of plastic material sub-units E1 and the outwardly slung material sub-units in the collection E2' has only a small surplus for forming the collection E2, and by choosing this surplus so that an air gap "t1" will be formed between the upper surface E2a and the flat surface 19b and its peripheral edge 19b'.

The gap "t" shall thus be defined by a chosen spacing between the surface 19b of the bearing unit 19 that faces the nozzle 7 and the open peripheral edge-portion 7a of the nozzle 7.

Consequently, the gap "t" should be given a dimension that exceeds 2.0 - 5.0 mm although, on the other hand, evaluations have indicated that the gap "t" should be smaller than 10 mm, such as 7 - 8 mm, in the case of thinner tubular sections 22.

It is particularly proposed that the diameter "D" of the bearing unit 19 shall be as small as possible under prevailing conditions, although there is required drive means for the bearing unit 19 and a pipe 17 for supplying sub-units E1 of the viscous plastic material.

A bearing unit 19 structured with minimal measurements and adapted to suit prevailing conditions allows the diameter "D" to be between 15 and 40 mm, preferably about 30 mm.

With these measurements regarding the diameter "D" and with a length "L" corresponding to (2.0 - 1.0) x D, such as (1.4 -1.6) x D there is obtained the possibility of effectively coating the inner surface of a tubular section 22 having a diameter of from 28 - 50 mm and greater.

The measurements given here with respect to the nozzle arrangement 1, make it possible to distribute such a viscous coating around the internal surface 24 of a tubular section 22 of small tubular diameter or tubular dimensions. In respect of tubular sections of larger diameters or dimensions, such as 100 mm, it is proposed that there is used a nozzle-centring device 23 in a typical manner.

According to directives made with respect to the present invention this device shall be connected with and fastened to the outer cylindrical surface 19d of the bearing unit 19, within the area referenced "L1" with the aid of fastening means not shown.

The plastic material sub-units E2 are intended to be slung out through the gap "t" and to form a thick viscous coating 10a on the interior surface 24 of the tubular section 22 as a result of applied rotational movement emanating from rotation of the nozzle 7 around its rotational axel 7', which rotates at a speed corresponding to between 8 000 and 10 000 rpm.

According to the invention, plastic material sub-units E2' are also slung-out via the slots 20.

A chosen first percentage of plastic sub-units of maximum high density shall be adapted to pass said gap "t" as an upper hollow cylindrical collection E2, while a chosen second percentage of sub-units of low material density shall be adapted to pass through said through-penetrating slots 20 as a subsequent or lower hollow-cylindrical collection E2'.

It will be evident from the embodiment described by way of an introduction that the ratio between a chosen percentage E2 of high material density and a chosen percentage E2' of low material density can be achieved by selective dimensioning of the gap "t" (or "t" - "t1") and by appropriate dimensioning of the slots 20, where the percentage E2 will increase with increasing dimensions of the gap "t" and a reduction in the number of slots and/or a reduction in the cross-section of the slots 20, or vice versa.

The through-penetrating slots 20 are shown to extend from an open upper edge-portion 7a of the nozzle 7 towards and up to a closed bottom part 7d of the nozzle 7.

The slots 20 will preferably be more than four in number, and a practical deliberation indicates that they should be less than ten.

A pipe 17 for the infeed of plastic material sub-units E1 extends by the side of the bearing unit 19 and drive means 18 for effecting said rotation.

To this end, the bearing unit 19 is fastened to a Bowden-cable 18 whose casing 18a is fastened to the bearing unit 19 via a sleeve 18c and the wire 18b of which is enclosed via a sleeve 18 and fastened to a side-related trunnion or axle fixed to the nozzle 7.

The nozzle 7 includes a cavity 16 which functions as a magazine and which has a depth conforming to or smaller than the diameter of the open upper edge-portion 7a.

Figure 6 illustrates an alternative embodiment to the embodiment shown in Figure 4, wherewith the lower surface part 19b of the bearing unit 19 is bevelled at its periphery, as shown at 19c, in order to open up the gap "t" at its periphery so as to avoid agglomerations, such as E10.

Instead of a bevel 19c said lower surface part 19b may have a domed shape.

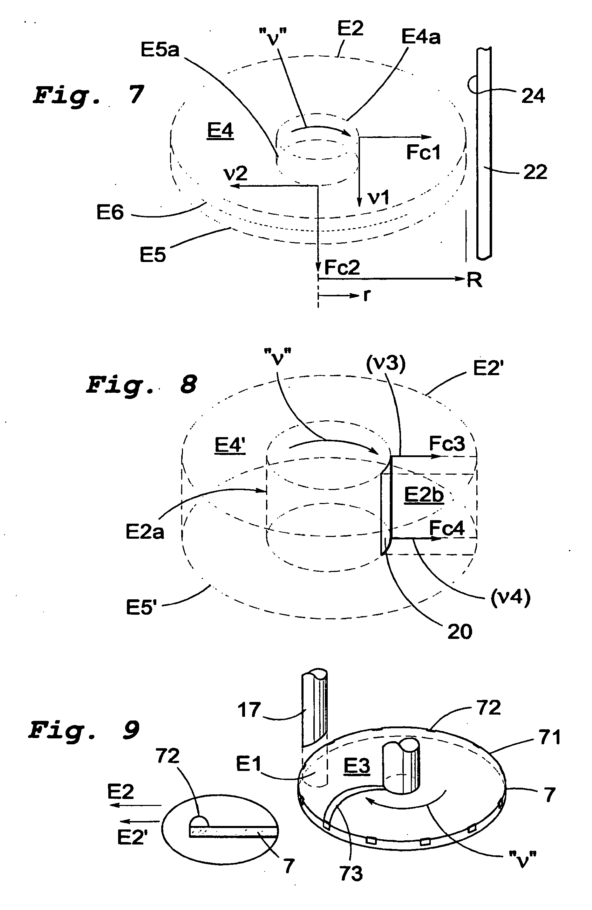

Figure 7 illustrates more theoretically those conditions that will apply with regard to the hollow cylindrical collection E2.

This collection E2 is illustrated as two outer layers, an upper layer E4 and a lower layer E5 and one (single) intermediate layer E6.

The upper layer E4 will have a speed of rotation "*v*1" which is somewhat lower than the rotational speed "*v*2" of the lower layer E5, which is driven by rotation of the nozzle 7.

The centrifugal force "Fc" (calculated as mass (m) x speed (*v*) squared divided by the radius (r)) acts radially as "Fc1" for layer E4 and as "Fc2" for layer E5.

The speed "*v*2" may conform directly to the peripheral speed of the nozzle 7, particularly when the edge 7a of the nozzle includes teeth or some similar material driving means.

A co-ordination of these layer-related forces, in the case of layer E4 the larger forces "*v*1" and "Fc1" and in the case of the layer E5 the greater forces "*v*2" and "Fc2" create a "turbulent" layer E6, which wanders in the direction of rotation "*v*".

With regard to the occurring density of the material it can be assumed that in the area E4a and E5a the material sub-units will have a material density corresponding to the density of the plastic material sub-units E1 in respect of supplied plastic material that includes a reinforcing agent.

When these material sub-units are slung out in the area E4a and E5a from a circular surface that has a circumference of **2r x** π towards and onto a circular surface 24 of the tubular section 22 having a circumference of **2R x** π, the material density will decrease at the surface 24 by a factor corresponding to "r/R".

With regard to the material density of the hollow cylindrical sub-units E2' according to Figure 8, it will be noted that material sub-units slung out in the area E2a will have the form of jets that include an upper layer E4' and a lower layer E5' and that these layers will be co-ordinated via slots 20 such as to form rectangular "jets" referenced E2b.

The centrifugal forces "Fc3" and "Fc4" are essentially of equal magnitude (although the conical shape of the nozzle 7 will give a certain variation).

The jets E2b are also influenced by velocity vectors "v3" and "v4", which are solely indicated in the figure.

These velocity vectors "v3" and "v4" are essentially of equal magnitudes and have the same direction (although the conical shape of the nozzle 7 will give a certain variation).

When these jet-like material sub-units E2b (structured as rectangles) within the slots 20 are slung out from a circular surface having a circumference of **2r x** π towards and onto a circular surface 24 of the tubular section 22 having a circumference of **2R x** π, the material density of the jets will decrease at the surface 24 by a factor of "r/R".

The material density of the collection E2' will also be dependent on the number of slots 20 and the height and width dimension of one or more of said slots.

The material density of the collection E2' is also reduced by n/360°, where "n" represents the number of degrees included by the combined width of all slots 20.

The viscous coating 10 on the inner surface 24 of the tubular section 22 is built-up initially by an outwardly slung collection E2 of high material density (r/R) and this coating 10a is supplemented with an outwardly slung collection E2' of low material density (n · r/360 · R) in the form of jets E2b, which will frequently have different energies and "work" the layer 10a as the layer 10b is formed.

Figure 9 is a perspective view of a nozzle 7 whose upwardly directed peripheral edge 71 includes apertures 72 corresponding to the slots 20.

The pipe 17 feeds plastic material sub-units E1 against the peripheral edge 71 of the nozzle and these sub-units are slung-out with the aid of vanes 73 in a surplus amount E1 such as to provide two collections E2, E2' in the same way as that described above.

It has been found beneficial to vibrate the bearing unit 19 with a co-ordinated nozzle 7, by allowing a wire of the Bowden-cable to be placed with an adaptive clearance relative to its surrounding casing.

According to the invention, the eccentricity "e" chosen shall be less than 50% of the diameter "D" of the bearing unit 19 or of the motor unit.

The eccentricity "e" can correspond to 10 to 20% of said diameter.

It is also proposed that the peripheral edge section 7a of the nozzle 7 shall conform to a virtual cylinder (not shown) that closely surrounds the bearing unit 19 or the motor unit.

According to the invention the arrangement includes a device for causing a change in rotation and/or a transformation of the speed of rotation between the drive axel 18b of the Bowden-cable or of the motor unit and the axel 7' of the nozzle 7.

This device 190 may have the form of co-ordinated gear wheels 191, 192 of mutually the same or different diameters and/or mutually the same or different number of teeth.

It is particularly proposed that the bearing unit 19, or the motor unit, can be actuated for rotational movement F1 or F2 respectively around an axially orientated axel 181 and therewith controllably adapt the distance between the peripheral edge-portion 7a of the nozzle 7 and the internal surface of the tubular section 22 for a more locally concentrated coating of viscous plastic material sub-units.

It will be understood that the invention is not restricted to the embodiment described above by way of example and that modifications can be made within the scope of the inventive concept illustrated in the accompanying claims.

It will also be observed in particular that each illustrated unit and/or circuit can be combined with each other illustrated unit and/or circuit within the scope of the accompanying claims so as to achieve the desired technical function.

## Claims

1. A rotatable nozzle arrangement comprising a nozzle (7) and a bearing unit (19) or a motor unit, whose rotatable axle (19a) is co-ordinated with the nozzle, wherein the nozzle (7), when rotating inside a tubular section (22), functions to sling a curable viscous plastic material (E2, E2') collected, inter alia, in a magazine (16) in said nozzle onto the inner surface (24) of said tubular section (22) and there create and build-up a viscous coating (10) of plastic material of a given thickness, **characterised in that** the nozzle (7) is orientated eccentrically in relation to the bearing unit (19) or the motor unit; and **in that** a first percentage of the plastic material (E1) fed to the magazine (16) is concentrated to an inner wall portion (7c) of the nozzle (7), that the wall portion (7c) has a cone angle ("a") in the range of 30 - 60°, that said wall portion (7c) includes a number of through-penetrating slots (20), and whereby a first percentage of the total amount of plastic material will be caused to pass through a gap ("t") defined by a distance between the bearing unit or the motor unit surface facing towards the nozzle and an open edge portion (7a) of the nozzle, whereas a second percentage of the total material will be caused to pass through said through-penetrating slots (20).

2. An arrangement according to claim 1, **characterised in that** said slots are structured to converge towards the apex (O) of a straight truncated cone.

3. An arrangement according to claim 1, **characterised in that** the surface (19c) of the bearing unit that faces towards the nozzle has a bevelled periphery or has a domed shape.

4. An arrangement according to claim 1, **characterised by** said gap ("t") defined by a distance, between the bearing unit surface (19b) facing towards the nozzle and the open edge portion (7a) of the nozzle, this distance exceeding 2.0 mm.

5. An arrangement according to claim 4, **characterised in that** the distance is smaller than 10 mm.

6. An arrangement according to claim 1 or 5, **characterised in that** the bearing unit (19) has a diameter (D) of between 15 and 30 mm, preferably about 20 mm.

7. An arrangement according to claim 1, **characterised in that** the through-penetrating slots extend from an open upper edge portion (7a) towards and up to a closed bottom part (7d).

8. An arrangement according to claim 1, **characterised in that** the arrangement includes a pipe (17) for the infeed of plastic material sub-units (E1), said pipe extending through and alongside said bearing unit (19).

9. An arrangement according to claim 1, **characterised in that** the bearing unit (19) is co-ordinated with a Bowden-cable whose casing (18a) is fastened to said bearing unit (19) and whose wire (18b) is fastened to a nozzle trunnion (7e).

10. An arrangement according to claim 1, **characterised in that** a wire and a casing of a Bowden-cable are mutually dimensioned so that rotation of the wire will generate vibratory movement of the bearing unit.

11. An arrangement according to claim 1, **characterised by** a chosen eccentricity which is smaller than 50% of the diameter of the bearing unit.

12. An arrangement according to claim 11, **characterised by** a chosen eccentricity which causes a peripheral edge section of the nozzle to conform to a virtual cylinder which closely surrounds the bearing unit.

13. An arrangement according to claim 9, or 10, **characterised by** a rotation changing and/or a rotation transforming means is-operative between the wire of the Bowden-cable and the nozzle (7).

14. An arrangement according to claim 1, or 13, **characterised by** a rotation transforming means in the form of co-ordinated gear wheels having the same or different number of teeth.

15. An arrangement according to claim 1, **characterised in that** the bearing unit (19), or the motor unit, can be actuated for rotational movement about an axially orientated axle (18'), therewith enabling the distance between the open edge portion (7a) of the nozzle (7) and the interior surface (24) of the tubular section to be adjusted so as to provide a more locally concentrated coating.

## Patentansprüche

1. Drehbare Düsenanordnung, welche eine Düse (7) und eine Lagereinheit (19) oder eine Motoreneinheit umfasst, deren drehbare Achse (19a) mit der Düse koordiniert ist, wobei die Düse (7), wenn sie sich in einem röhrenförmigen Abschnitt (22) dreht, so arbeitet, dass sie ein härtbares viskoses Kunststoffmaterial (E2, E2'), das unter Anderem in einem Magazin (16) in der Düse gesammelt wird, auf die Innenfläche (24) des röhrenförmigen Abschnitts (22) schleudert und dort eine viskose Beschichtung (10) aus einem Kunststoffmaterial einer vorgegebenen Dichte erzeugt und aufbaut, **dadurch gekennzeichnet, dass** die Düse (7) in Bezug auf die Lagereinheit (19) oder die Motoreneinheit exzentrisch orientiert ist und dass ein erster Prozentsatz des Kunststoffmaterials (E1), das in das Magazin (16) eingeführt wird, zu einem inneren Wandabschnitt (7c) der Düse (7) hin konzentriert wird, dass der Wandabschnitt (7c) einen Kegelwinkel ("a") im Bereich von 30° bis 60° aufweist, dass der Wandabschnitt (7c) eine Anzahl von durchgehenden Schlitzen (20) umfasst und wobei ein erster Prozentsatz der Gesamtmenge an Kunststoffmaterial dazu gebracht wird, durch einen Spalt ("t") zu gelangen, der durch einen Abstand zwischen der Fläche der Lagereinheit oder der Motoreneinheit, die der Düse zugewandt ist, und einem offenen Randabschnitt (7a) der Düse definiert wird, während ein zweiter Prozentsatz des Gesamtmaterials dazu gebracht wird, durch die durchgehenden Schlitze (20) zu gelangen.

2. Anordnung nach Anspruch 1, **dadurch gekennzeichnet, dass** die Schlitze so strukturiert sind, dass sie in Richtung der Spitze (O) eines geradlinigen Stumpfkegels konvergieren.

3. Anordnung nach Anspruch 1, **dadurch gekennzeichnet, dass** die Fläche (19c) der Lagereinheit, die der Düse zugewandt ist, einen abgeschrägten Rand oder eine gewölbte Form aufweist.

4. Anordnung nach Anspruch 1, **dadurch gekennzeichnet, dass** der Abstand zwischen der Fläche (19b) der Lagereinheit, die der Düse zugewandt ist, und dem offenen Randabschnitt (7a) der Düse, welcher den Spalt ("t") definiert, 2,0 mm übersteigt.

5. Anordnung nach Anspruch 4, **dadurch gekennzeichnet, dass** der Abstand geringer als 10 mm ist.

6. Anordnung nach Anspruch 1 oder 5, **dadurch gekennzeichnet, dass** die Lagereinheit (19) einen Durchmesser (D) von 15 mm bis 30 mm, vorzugsweise ungefähr 20 mm, aufweist.

7. Anordnung nach Anspruch 1, **dadurch gekennzeichnet, dass** sich die durchgehenden Schlitze von einem offenen oberen Randabschnitt (7a) in Richtung auf einen geschlossenen unteren Teil (7d) und bis zu diesem erstrecken.

8. Anordnung nach Anspruch 1, **dadurch gekennzeichnet, dass** die Anordnung ein Rohr (17) zum Einführen von Kunststoff-Teileinheiten (E1) umfasst, wobei sich das Rohr durch die Lagereinheit (19) hindurch und an dieser entlang erstreckt.

9. Anordnung nach Anspruch 1, **dadurch gekennzeichnet, dass** die Lagereinheit (19) mit einem Bowdenzug koordiniert ist, dessen Mantel (18a) an der Lagereinheit (19) befestigt ist und dessen Seele (18b) an einem Düsenzapfen (7e) befestigt ist.

10. Anordnung nach Anspruch 1, **dadurch gekennzeichnet, dass** eine Seele und ein Mantel eines Bowdenzuges zueinander so dimensioniert sind, dass eine Drehung der Seele eine Schwingbewegung der Lagereinheit erzeugt.

11. Anordnung nach Anspruch 1, **gekennzeichnet durch** eine gewählte Exzentrizität, die weniger als 50 % des Durchmessers der Lagereinheit beträgt.

12. Anordnung nach Anspruch 11, **gekennzeichnet durch** eine gewählte Exzentrizität, die bewirkt, dass sich ein Randabschnitt der Düse an einen virtuellen Zylinder anpasst, welcher die Lagereinheit eng umgibt.

13. Anordnung nach Anspruch 9 oder 10, **dadurch gekennzeichnet, dass** zwischen der Seele des Bowdenzuges und der Düse (7) ein Rotationsänderungs- und/oder Rotationsumwandlungsmittel wirkt.

14. Anordnung nach Anspruch 1 oder 13, **gekennzeichnet durch** ein Rotationsumwandlungsmittel in Form koordinierter Zahnräder, welche dieselbe oder unterschiedliche Anzahlen an Zähnen aufweisen.

15. Anordnung nach Anspruch 1, **dadurch gekennzeichnet, dass** die Lagereinheit (19) oder die Motoreinheit zu einer Drehbewegung um eine axial orientierte Achse (18') gebracht werden kann, womit ermöglicht wird, dass der Abstand zwischen dem offenen Randabschnitt (7a) der Düse (7) und der Innenfläche (24) des röhrenförmigen Abschnitts angepasst wird, um für eine mehr lokal konzentrierte Beschichtung zu sorgen.

## Revendications

1. Disposition de buse rotative, comprenant une buse (7) et un ensemble support (19) ou un ensemble moteur dont l'arbre rotatif (19a) est coordonné avec la buse, la buse (7), lorsqu'elle tourne à l'intérieur d'une section tubulaire (22), ayant pour fonction de projeter une matière plastique visqueuse polymérisable (E2, E2'), stockée entre autres dans un réservoir (16) de ladite buse, sur la surface intérieure (24) de ladite section tubulaire (22) afin d'y former et accumuler un revêtement visqueux (10) de matière plastique ayant une épaisseur donnée, **caractérisée en ce que** la buse (7) est orientée de manière excentrée par rapport à l'ensemble support (19) ou à l'ensemble moteur ; et **en ce qu'**un premier pourcentage de la matière plastique (E1) alimentée dans le réservoir (16) est concentré sur une partie de paroi intérieure (7c) de la buse (7), que la partie de paroi (7c) présente un angle conique ("a") dans la plage de 30° à 60°, que ladite partie de paroi (7c) comporte un certain nombre de fentes traversantes (20), un premier pourcentage de la quantité totale de matière plastique étant forcé à passer dans un espace ("t") défini par la distance entre la surface de l'ensemble support ou de l'ensemble moteur dirigée vers la buse et une partie de bord ouverte (7a) de la buse, tandis qu'un deuxième pourcentage de la quantité totale de matière plastique est forcé de passer à travers lesdites fentes traversantes (20).

2. Disposition selon la revendication 1, **caractérisée en ce que** lesdites fentes sont structurées pour converger vers le sommet (O) d'un tronc de cône droit.

3. Disposition selon la revendication 1, **caractérisée en ce que** la surface (19c) de l'ensemble support dirigée vers la buse possède une circonférence en biseau ou présente une forme bombée.

4. Disposition selon la revendication 1, **caractérisée en ce que** ledit espace ("t") est défini par la distance entre la surface de l'ensemble support (19b) dirigée vers la buse et la partie de bord ouverte (7a) de la buse, ladite distance étant supérieure à 2,0 mm.

5. Disposition selon la revendication 4, **caractérisée en ce que** la distance est inférieure à 10 mm.

6. Disposition selon la revendication 1 ou la revendication 5, **caractérisée en ce que** l'ensemble support (19) a un diamètre (D) allant de 15 à 30 mm, de préférence égal à 20 mm environ.

7. Disposition selon la revendication 1, **caractérisée en ce que** les fentes traversantes s'étendent depuis une partie de bord supérieure ouverte (7a) en direction de et jusqu'à une partie de fond fermée (7d).

8. Disposition selon la revendication 1, **caractérisée en ce que** ladite disposition comprend un tuyau (17) pour alimenter des sous-unités de matière plastique (E1), ledit tuyau s'étendant dans et le long dudit ensemble support (19).

9. Disposition selon la revendication 1, **caractérisée en ce que** l'ensemble support (19) est coordonné avec un câble Bowden dont la gaine (18a) est fixée audit ensemble support (19) et dont le fil métallique (18b) est fixé à un tourillon (7e) de la buse.

10. Disposition selon la revendication 1, **caractérisée en ce que** le fil métallique et la gaine du câble Bowden sont dimensionnés l'un en fonction de l'autre de façon que la rotation du fil génère un mouvement vibratoire de l'ensemble support.

11. Disposition selon la revendication 1, **caractérisée en ce que** l'excentricité choisie est inférieure à 50% du diamètre de l'ensemble support.

12. Disposition selon la revendication 11, **caractérisée en ce que** l'excentricité choisie force une partie de bord périphérique de la buse à se conformer à un cylindre virtuel entourant étroitement l'ensemble support.

13. Disposition selon la revendication 9 ou 10, **caractérisée en ce qu'**elle comprend un moyen de modification et/ou de transformation de la rotation agissant entre le fil métallique du câble Bowden et la buse (7).

14. Disposition selon la revendication 1 ou la revendication 13, **caractérisée en ce qu'**elle comprend un moyen de modification de la rotation sous la forme d'engrenages coordonnés ayant un nombre de dents identique ou différent.

15. Disposition selon la revendication 1, **caractérisée en ce que** l'ensemble support (19) ou l'ensemble moteur peut être entraîné en rotation autour d'un arbre orienté axialement (18'), permettant ainsi d'ajuster la distance entre la partie de bord ouverte (7a) de la buse (7) et la surface intérieure (24) de la section tubulaire de façon à obtenir un revêtement localement plus concentré.
